(19) Europäisches Patentamt
European Patent Office
Office européen des brevets

(11) **EP 2 648 255 A1**

(12) **EUROPÄISCHE PATENTANMELDUNG**

(43) Veröffentlichungstag:
**09.10.2013 Patentblatt 2013/41**

(21) Anmeldenummer: **13001474.9**

(22) Anmeldetag: **22.03.2013**

(51) Int Cl.:
*H01M 8/02* (2006.01)   *C04B 37/00* (2006.01)
*F16J 15/10* (2006.01)   *H01M 8/12* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **04.04.2012 DE 102012006864**

(71) Anmelder: **Forschungszentrum Jülich GmbH 52425 Jülich (DE)**

(72) Erfinder:
• **Faidel, Dietrich**
  **52064 Aachen (DE)**
• **Behr, Wilfried**
  **53879 Euskirchen (DE)**
• **Reisgen, Uwe**
  **52249 Eschweiler (DE)**

(54) **Hochtemperaturdichtung umfassend Glaslot sowie Verfahren zur Herstellung derselben**

(57)    Die Erfindung betrifft eine Dichtungsanordnung für den Einsatz einer Glaslotdichtung zwischen hoch temperaturbelasteten Bauteilen, umfassend wenigstens zwei zu fügende Bauteile 1 und 2, dessen Oberflächen in einem Abstand x beabstandet angeordnet sind, sowie zwischen den Bauteilen im Bereich der Dichtungsfuge angeordnetes Glaslot. Erfindungsgemäß weisen die beide Bauteile im Bereich der Dichtungsfuge eine korrespondierende Erhebung auf, dergestalt, dass die beiden Erhebungen einen Spalt zur Aufnahme des Glaslotes bilden, dessen Spalthöhe y geringer ist, als der Abstand x. Zudem weist die erfindungsgemäße Dichtungsanordnung innerhalb des Spaltes ein Glaslot auf, welches bei einer Betriebstemperatur zwischen 550 und 900 °C erweicht vorliegt.

Vorteilhaft weist die Dichtungsanordnung Erhebungen mit einer Steghöhe $z_h$ von wenigstens 500 $\mu$m auf. Die Steghöhen $z_{h1}$ und $z_{h2}$ können beispielsweise identisch sein.

In einer Ausgestaltung der erfindungsgemäßen Dichtungsanordnung weist diese wenigstens zwei Dichtungsfugen mit jeweils korrespondierenden Erhebungen auf, wobei die Erhebungen eines Bauteils einen Abstand $z_b$ von wenigstens 1 mm aufweisen. Bei der Ausgestaltung mit mehreren Dichtungsfugen kann diese identische Spaltenhöhen aufweisen, insbesondere Spalthöhen zwischen 50 und 150 $\mu$m.

Vorteilhaft umfasst die Dichtungsanordnung ein Glaslot, welches bei einer Betriebstemperatur zwischen 550 und 900 °C eine Viskosität zwischen 2,2 Pa.s und 2,6    Pa·s    aufweist.

In einer besonderen Ausgestaltung umfasst die Dichtungsanordnung ein Glaslot, welches eine dilatometrische Erweichungstemperatur ($T_D$) von weniger als 720 °C aufweist, vorteilhaft sogar von weniger als 650 °C und insbesondere von weniger als 550 °C.

Figur 1b

Printed by Jouve, 75001 PARIS (FR)

EP 2 648 255 A1

**Beschreibung**

Die Erfindung betrifft eine Hochtemperaturdichtung, und insbesondere eine solche Dichtung, die Glaslot zum Verbinden der Bauteile einsetzt. Solche elektrisch isolierenden Dichtungsanordnungen werden beispielsweise zur Abdichtung zwischen zwei Bauteilen eines Brennstoffzellenstacks insbesondere bei Hochtemperaturbrennstoffzellen (SOFC = solid oxid fuel cell) eingesetzt. Ferner betrifft die Erfindung die Herstellung einer solchen Hochtemperaturdichtung.

Stand der Technik

Die Herstellung von Hochtemperatur-Brennstoffzellensystemen erfordert unter anderem ein geeignetes Dichtungssystem, welches die Abdichtung zwischen den Bauteilen der Brennstoffzellen auch während des Betriebs langfristig sicherstellt. Typische Betriebstemperaturen für die SOFC liegen zwischen 500 °C und 1000 °C, insbesondere zwischen 750 °C und 850 °C. Solche Dichtungssysteme müssen dabei hohen Anforderungen genügen. Einerseits müssen sie die Gasdichtigkeit und die elektrische Isolation sicherstellen, andererseits muss neben der chemischen Stabilität eine ausreichend große Toleranz gegenüber mechanischer Beanspruchung gegeben sein, die regelmäßig beim thermischen Zyklieren hervorgerufen wird.

Eine bekannte Abdichtung ist beispielsweise ein bei SOFC- Betriebstemperaturen elastisches Glimmerpapier, welches zwischen zwei geprägten Stahlblechen gasdicht gekapselt wird. Zur Abdichtung benachbarter Ebenen innerhalb eines Brennstoffzellenstapels kann optional eine elektrisch isolierende Schicht vorgesehen werden.

Es ist ferner bereits bekannt, zur Abdichtung von SOFC- Systemen Gläser oder Glaslote einzusetzen. Ein Glaslot ist ein Glas mit einer Glasübergangs- oder auch Erweichungstemperatur, die je nach Verfahren bei 400 bis 900 °C liegt, und welches zum thermischen Verbinden oder Abdichten von Bauteilen verwendet wird. Das Verfahren ist dem Löten mit Metallen ähnlich.

Glaslot wird je nach Art bei einer Temperatur zwischen 350 °C und 700 °C verarbeitet, typische Temperaturen liegen bei ca. 500 °C. Bei diesen Temperaturen weisen dafür geeignete Glaslote in der Regel eine Viskosität von $\eta$ von $10^4$ bis $10^6$ dPa·s auf. Da Glas eine typische Erweichungstemperatur von ca. 600 °C hat, ist es bei dieser Temperatur regelmäßig noch fest, während das Glaslot häufig schon flüssig ist.

Sofern Gläser oder Glaslote als Dichtungsmaterial zur Verbindung und Abdichtung von Bauteilen im Hochtemperaturbereich eingesetzt werden, müssen sie besondere Eigenschaften aufweisen und hohen Anforderungen genügen.

Eine notwendige Bedingung für die Stabilität und die mechanische Stärke einer Glasdichtung ist beispielsweise die Begrenzung der mechanischen Belastung innerhalb der Glaskomponente bei den relevanten Temperaturen der Herstellung oder des Betriebs der verbundenen Bauteile. Um den Anforderungen an eine Dichtung gerecht zu werden, sollten zudem die zu verbindenden Bauteile unterhalb der dilatometrischen Erweichungstemperatur ($T_D$) der Glaskomponente aneinander angepasste thermische Ausdehnungskoeffizienten aufweisen, die für den Einsatz in Hochtemperatur-Brennstoffzellen in der Regel größer als $9*10^{-6}$ K$^{-1}$ sein sollten. Unter der dilatometrischen Erweichungstemperatur ($T_D$) ist die Temperatur zu verstehen, bei der die Kurve der relativen Längenänderung $\Delta L/L_0$ mit der Temperatur eine Steigung von Null aufweist.

Geeignete Glaslotdichtungen erfüllen aufgrund der chemischen Anbindung an die metallischen und oxidischen Dichtflächen ausgezeichnet die Anforderungen an die erforderliche Dichtheit. Ferner bewirken sie eine gute elektrische Isolation und weisen in der Regel die notwendige hohe chemische Beständigkeit gegenüber den Interkonnektor- und Elektrolytmaterialien und aggressiven Atmosphären auf. Zudem geben sie eine gewisse mechanische Stabilität.

Neben den wichtigen Materialgrößen, wie thermischer Ausdehnungskoeffizient, Transformationstemperatur und den elastischen Eigenschaften, können auch die Abkühlungsrate und die Form der Abkühlungsrate einen entscheidenden Einfluss auf die Eignung als Dichtungswerkstoff haben. Daneben können auch noch weitere Eigenschaften, wie beispielsweise elektrische Isolation oder optische Eigenschaften zu erfüllen sein. Die heute eingesetzten formstabilen Glasdichtungen sind oft nicht im Stande, die Verformung der Metallbauteile bei Thermozyklen auszuhalten. Dies führt zu Rissen in den Glasnähten und zum Versagen der Bauteile.

Ein weiterer Vorteil der Glaslotdichtungen ist die einfache Applikation. Glaslote können üblicherweise über x-y-gesteuerte Dispensersysteme als Paste auf wenigstens eine der Oberflächen der zu fügenden Bauteile aufgebracht werden. Diese Art der Glaslotverbindungen wird insbesondere bei planaren SOFC Stacks angewendet.

Für die vorgenannten Anwendungen sind im Fraunhofer-Institut für Keramische Technologien und Systeme IKTS bereits teilkristallisierende Gläser für verschiedene SOFC- Typen (ASC = Anodengestützte Brennstoffzelle, ESC = Elektrolytgestützte Brennstoffzelle) sowie Interkonnektor- und Elektrolytmaterialien entwickelt worden. Die Gläser können in Form von Pasten oder Folien appliziert werden und sind bereits in mehr als 800 Stacks mit variierenden Brenngaszusammensetzungen und Laufzeiten bis zu 10.000 h erfolgreich eingesetzt worden. Die von IKTS vorgeschlagenen und für die SOFC- Abdichtung geeigneten Gläser weisen eine Transformationstemperatur ($T_g$) zwischen ca. 530 bis 650 °C auf und werden in der Regel bei Temperaturen um 50 K oberhalb von $T_g$ gefügt.[1]

Das Glaslot (z. B. Glaslot H) wird beim Fügeprozess in der Regel 100 °C oberhalb der dilatometrischen Erweichungstemperatur ($T_D$ - 714 °C) erwärmt. Beim Abkühlen kristallisiert das Glaslot regelmäßig bei einer Temperatur die deutlich höher als $T_D$ liegt und härtet aus. Die Fügeverbindung erfolgt also in der Regel durch ein Glaslot, welches nach der erfolgten Erstarrung beim Fügeprozess beim anschließenden Betrieb der Bauteile bei Temperaturen unterhalb von 800 °C mechanisch stabil bleibt. Bei den Betriebsbedingungen des Brennstoffzellenstapels liegt das Glaslot dann als hochzähe Flüssigkeit vor, wobei im Rahmen dieser Erfindung unter dem Begriff "hochzäh" eine Viskosität um die 4 bis 6 Pa.s verstanden wird.

In der Regel wird der Dichtspalt der Glaslotdichtung über einen keramischen Abstandshalter eingestellt. Übliche Schichtdicken für solche Lotverbindungen liegen dabei im Bereich von 200 $\mu$m +/- 50 $\mu$m, die damit gleichzeitig auch die Größe des Dichtspaltes (Abstandshalter) darstellen.

Geringere Schichtdicken hätten den Nachteil, dass das Glaslot dünner und breiter aufgetragen werden muss. Dadurch kann es aufgrund der geringeren Verformbarkeit dieser Glaslotraupe zu Fügefehlern kommen.

Auf der anderen Seite weisen derartige Glastlotdichtungen bei relativ hohen Schichtdicken > 300 $\mu$m regelmäßig eine nur geringe Toleranz gegenüber der mechanischen Beanspruchung durch das Thermozyklieren auf. Dies liegt einerseits an der schlechten Wärmeleitfähigkeit des Glaslotes im Vergleich zu den benachbarten metallischen und/oder keramischen Bauteilen, und andererseits an dem spröden Verhalten von Glasloten.

Bei auskristallisierten Glasloten handelt es sich um Glaskeramik mit amorphem Rest. Daher sind sie in geringem Maße gegen thermische Spannungen resistent. Die Glaslote müssen im Ausdehnungs- und Benetzungsverhalten jedoch genau an die abzudichtenden Bauteile, insbesondere an den Interkonnektorwerkstoff angepasst werden. Die Zusammensetzung der Ausgangsgläser wird in der Regel so gewählt, dass beim Fügen die Kristallisation eines Phasengefüges erreicht wird, welches bei Raumtemperatur bis zur Betriebstemperatur von ca. 850 °C zur thermischen Ausdehnung des Interkonnektors kompatibel ist. Die Kristallite verhindern regelmäßig ein Wiedererweichen der Dichtung bei Betriebstemperatur. Unter den Silikatgläsern zeigt das System Ba- Al- Si- Ca- O durch die Kristallisation von Barium- Calzium- Silikaten und Barium- Aluminium- Silikaten das gewünschte Verhalten.

Die bislang bekannten und eingesetzten Glaslote erstarren nach dem Fügeprozess und sind auch bei Betriebstemperaturen der Brennstoffzelle in der Regel fest und bewirken dadurch eine gewisse mechanische Stabilität. Nachteilig reagieren solche Glaslote aber auf Grund ihrer Sprödheit empfindlich auf mechanische Belastungen. Zudem weisen sie mit der Zeit in Folge thermisch induzierter Spannungen Risse innerhalb des Glaslotes auf, die zu Undichtigkeiten führen können. Die thermische Zyklierfähigkeit ist regelmäßig gering.

Aufgabe und Lösung

Aufgabe der Erfindung ist es, eine langzeitstabile, gasdichte und elektrisch isolierende Abdichtung für den Einsatz in einer Hochtemperatur-Brennstoffzelle bereit zu stellen, deren Betriebstemperatur im Bereich zwischen 550 und 900 °C liegt.

Die Aufgabe wird gelöst durch eine für die Verwendung von flüssigen Glasloten angepasste Dichtungsanordnung gemäß Hauptanspruch, sowie ein Verfahren zur Herstellung einer solchen Dichtungsanordnung gemäß Nebenanspruch.

Vorteilhafte Ausführungsformen der Dichtungsanordnung und des Herstellungsverfahrens finden sich in den jeweils darauf rückbezogenen Ansprüchen.

Gegenstand der Erfindung

Im Rahmen der Erfindung wurde herausgefunden, dass ein Glaslot mit entsprechend niedriger dilatometrischer Erweichungstemperatur ($T_D$) in Kombination mit einer daran angepassten Dichtungsanordnung vorteilhaft zu einer besonders langzeitstabilen, gasdichten und elektrisch isolierenden Abdichtung für Komponenten einer Hochtemperatur-Brennstoffzelle führt. Die flüssige Glaslotdichtung wird dabei in einem engen Spalt gehalten, auf den Kapillarkräfte einwirken. Das Design der Bauteile wird gegenüber dem Stand der Technik insoweit abgeändert, dass jede Dichtungsnaht nunmehr wenigstens einen separaten Spalt besitzt, in dem die Kapillarkräfte auf das darin befindliche Glaslot wirken können.

Das für die erfindungsgemäße Dichtungsanordnung geeignete Glaslot weist dazu eine dilatometrische Erweichungstemperatur ($T_D$) auf, die deutlich unterhalb der Betriebstemperatur der Brennstoffzelle liegt. Der Abstand zwischen der beabsichtigten minimalen Betriebstemperatur und der dilatometrischen Erweichungstemperatur ($T_D$) sollte wenigstens 140 K, besser noch 240 K betragen. Dadurch wird sichergestellt, dass das Glaslot bei Betriebstemperaturen einer SOFC regelmäßig in erweichtem Zustand vorliegt, wobei im Rahmen dieser Erfindung unter dem Begriff "erweicht" eine Viskosität um die 2,2 bis 2,6 Pa.s verstanden wird.

Der Vorteil der bei Betriebstemperaturen zwischen 550 und 900 °C flüssigen Glaslotdichtung ist, dass thermisch induzierte Spannungen ganz vermieden werden und es somit nicht zu einer Rissbildung kommt. Das Glaslot benetzt das Material der zu fügenden Bauteile in der Regel nicht.

Bei der flüssigen Glaslotdichtung wird regelmäßig eine Kristallisation verhindert. Kristallitenbildung könnte durch eine schnellere Abkühlung oder durch sehr langsam kristallisierende Gläser verhindert werden.

Während der langsamen Erwärmung (2 K/min) auf die Fügetemperatur (je nach Glaslot: 820 °C - 950 °C) entweicht das Bindemittel aus der Glaslotraupe. Je nach Fügeprogramm kann noch ein Zwischenschritt (30 min.) zur besseren Entgasung eingefügt werden. Bei der anschließenden thermischen Behandlung sintert die Grünschicht des Glaslotes und die Fügung erfolgt aufgrund des viskosen Fließens des Glases. Neben der gasdichten Fügung bilden sich erste Keime und Kristallite im Glas, und über eine gezielte Steuerung des Temperaturprozesses wird eine Glaskeramik gebildet. Der letzte Schritt ist eine geregelte Abkühlung auf Raumtemperatur mit 2 K/min.

Bei flüssigen Dichtungen kann die Erwärmung identisch realisiert werden, bei der Abkühlung sollten sich daher keine Kristallite bilden.

Das Glaslot selbst kann, wie bereits aus dem Stand der Technik bekannt ist, als Paste, Pulver oder vorgefertigte Glasfolie oder auf die zu fügenden bzw. abzudichtenden Bauteile aufgebracht werden.

Tabelle 1:

| Glaslot | BaO [Gew.-%] | CaO [Gew.-%] | SiO$_2$ [Gew.-%] | Ausdehnungskoeffizient bei 600°C [$10^{-6}$K$^{-1}$] | dilatometrische Erweichungstemperatur ($T_D$) [°C] | Fügetemperatur [°C] |
|---|---|---|---|---|---|---|
| B | 36,72 | 15,84 | 46,81 | 11,9 | 757 | 950 |
| G | 34,5 | 14,87 | 43,95 | 10 | 750 | 850 |
| H | 48,21 | 6,05 | 29,75 | 9,5 | 714 | 820 |

Geeignete Glaslote sind beispielsweise aus der Tabelle 1 zu entnehmen. Prinzipiell können alle die in Tabelle 1 aufgeführten Glaslote (B, G, H) eingesetzt werden. Natürlich darf die Betriebstemperatur nicht so hoch sein, dass die Bauteile schmelzen. Aber selbst bei Glaslot B (950°C + 240 °C = 1190 °C) liegt man deutlich unterhalb der Schmelztemperatur von beispielsweise Crofer 22APU-Stahl mit ca. 1510 °C.

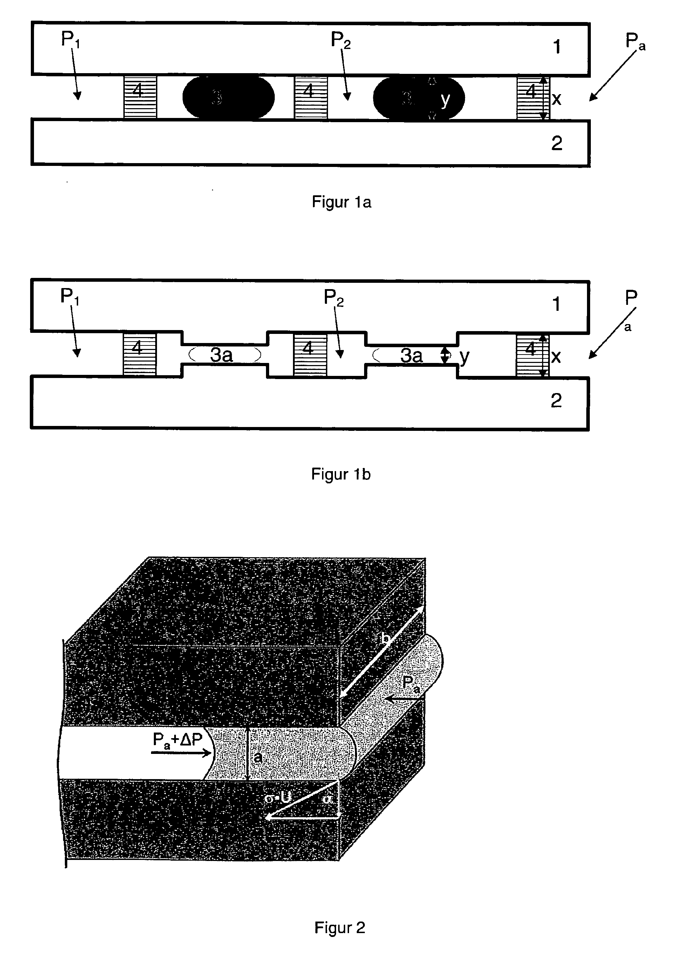

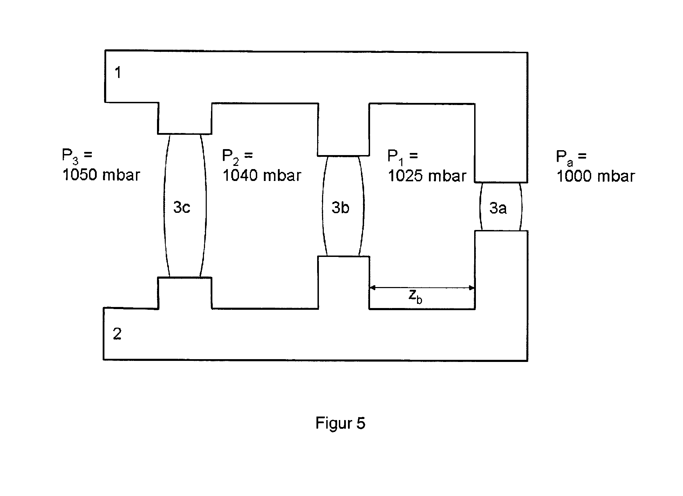

Die Verwendung von bei Betriebstemperaturen flüssigen Glasloten erfordert regelmäßig eine modifizierte Dichtungsanordnung, wie sie Gegenstand dieser Erfindung ist. Vorteilhaft wird das Glaslot zwischen Bauteilen aufgebracht, die eine daran angepasste besondere Geometrie (Profil) aufweisen. Zur Verdeutlichung des Sachverhaltes wird auf die Figuren 1 bis 5 verwiesen.

Bislang werden Glaslotdichtungen, die bei den Betriebstemperaturen als feste Dichtungen vorliegen, üblicherweise flächig oder linienförmig zwischen den in der Regel im Dichtungsbereich planar zu fügenden Bauteilen 1, 2 aufgebracht, wobei keramische Abstandshalter 4 in unmittelbarer Nähe zum Glaslot für einen Mindestabstand x zwischen den Bauteilen sorgen (siehe Figur 1a). Die Dicke y der Glaslotdichtung 3 entspricht somit der Höhe x des Abstandshalters 3. Diese liegt üblicherweise zwischen 150 μm und 250 μm. Geringere Abstände sind nicht sinnvoll, weil es dadurch aufgrund der geringeren Verformbarkeit dieser Glaslotraupe zu Fügefehlern kommen kann. Größere Abstände sind ebenfalls nicht sinnvoll, weil dadurch die Festigkeit der Lötverbindung nachlässt.

Anstelle der bisherigen Anordnung, bei der die Dicke y der Glaslotdichtung 3 und die Höhe x des Abstandshalters 4 identisch sind, weist die erfindungsgemäße Dichtungsanordnung für den Einsatz einer bei Betriebstemperaturen flüssigen Glaslotdichtung 3a nunmehr eine Glaslotdichtung auf, deren Höhe y deutlich unterhalb der Höhe x des Abstandshalters 4 liegt. Erfindungsgemäß weisen die Bauteile 1 und 2 dazu im Bereich der Glaslotdichtung jeweils eine Erhebung (Steg) 1 a, 2a auf, so dass sich zwischen den Bauteilen im Bereich der Erhebung ein schmaler Spalt ergibt, dessen Spaltmaß y deutlich geringer ist, als der Abstand x zwischen den Bauteilen im Bereich außerhalb der Erhebung, bzw. des Spaltes. Die Stege geben dabei die Position der aufzubringenden Glaslotraupe vor.

In einer vorteilhaften Ausführung weisen jeweils beide zu fügenden Bauteile Stege auf, die derart korrelieren, dass sich zwischen ihren Oberflächen ein durchgehender enger Spalt mit einem konstanten Spaltmaß y ergibt.

In einer weiteren Ausgestaltung der Erfindung sind die Oberflächen der Erhebungen planparallel zueinander ausgerichtet, so dass sich ein gleichbleibendes Spaltmaß y ergibt. Auf die plane Oberfläche einer der Erhebungen kann dann zum Fügen die entsprechende Glaslotraupe aufgebracht werden.

Vorteilhaft weisen die Stege dabei derart plane Oberflächen auf, die parallel zur Oberfläche der entsprechenden Bauteile ausgerichtet sind.

Wie beim Stand der Technik können zusätzliche keramische Abstandshalter 4 eingesetzt werden, die jedoch zwischen den Bauteilen im Bereich außerhalb der Erhebung positioniert sind, und die deutlich größer sind als die sich aus dem Abstand zwischen den Erhebungen ergebende Spalthöhe.

Die engen Spalthöhen y zwischen 50 μm und 150 μm bewirken, dass vorteilhaft Kapillarkräfte auf das dazwischen befindliche, und bei Betriebstemperaturen flüssige Glaslot einwirken können. Die auf das im Inneren des Spaltes angeordnete Glaslot wirkenden Kapillarkräfte sind dabei umso stärker, je schmaler der Spaltabstand gewählt wird. Die minimale Spalthöhe wird lediglich durch die Gefahr möglicher Kurzschlüsse begrenzt.

Die Erhebungen weisen jeweils eine Steghöhe $z_h$ von mindestens 500 μm auf, wobei die Steghöhen für die beiden beteiligten Bauteile $z_{h1}$ und $z_{h2}$ gleich oder aber auch unterschiedlich sein können. Damit ergibt sich das maximale Spaltmaß y zwischen den Erhebungen der Bauteile 1 und 2 zu x - $z_{h1}$ - $z_{h2}$ = y.

Sofern mehrere Dichtungsfugen (Erhebungen) beabsichtigt sind, sollten die Stege auf einem Bauteil wenigstens einen Abstand $z_b$ von ca. 1 mm untereinander aufweisen. Die Dichtungsfugen können dabei parallel angeordnet sein. Dies ist aber nicht zwingend.

In dem Spalt wirken auf das flüssige Glaslot, sobald dieses aus dem Spalt austritt oder in den Spalt eindringt, Kapillarkräfte ein. Diese Kapillarkräfte verhindern regelmäßig ein Ausfließen der Glaslotdichtung, selbst wenn im Inneren der Baugruppe ein Differenzdruck gegenüber dem Außendruck $P_a$ herrscht. Solange die Druckkraft die Kapillarkraft nicht übersteigt, wird das flüssige Glaslot im Spalt gehalten und kann so die Dichtungsfunktion erfüllen.

Durch die erfindungsgemäße Dichtungsvorrichtung, die besonders schmale und enge Spalten vorsieht, die mit einem während der Betriebstemperaturen flüssigen Glaslot gefüllt sind, ist es vorteilhaft möglich, eine besonders langzeitstabile Fügeverbindung herzustellen. Das flüssige, und durch Kapillarkräfte in den Spalten gehaltene Glaslot kann leicht Druckunterschiede zwischen dem Zellinneren und dem Außendruck auffangen, ohne die Dichtigkeit zu gefährden. Zudem ist deutlich weniger Glaslot notwendig.

Spezielle Ausführung

Nachfolgend werden einige theoretische Überlegungen angestellt, die den Erfindungsgegenstand verdeutlichen sollen.

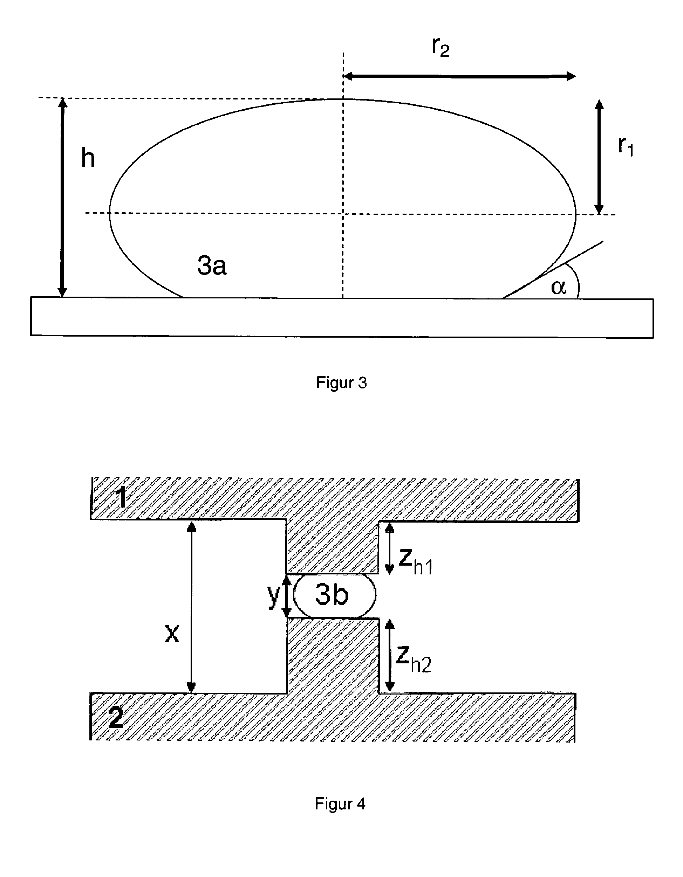

Es wird eine vereinfachte Betrachtung einer flüssigen Substanz (Glaslot) am Austritt des Dichtungsspaltes in die Umgebung betrachtet (Figur 3). Auf diese Substanz wirken mehrere Kräfte: die Druckkraft, die durch den Umgebungsdruck verursacht wird, die Druckkraft, die durch den Druck im Inneren der Baugruppe verursacht wird, und die Kapillarkraft, durch die Oberflächenspannung des Glaslotes verursacht wird.

Im Gleichgewichtszustand gilt:

$$(P_a + \Delta P) \, {}^*A = P_a \, {}^* A + \sigma \, {}^* U \, {}^* \sin \alpha \qquad <=>$$

$$\Delta P \, {}^*A = \sigma \, {}^* U \, {}^* \sin \alpha \qquad <=>$$

$$\Delta P = \sigma \, {}^* \frac{U}{A} \, {}^* \sin \alpha \qquad <=>$$

$$\Delta P = \sigma \, {}^* \frac{2 \cdot (y+b)}{y \cdot b} \, {}^* \sin \alpha \quad ; \text{ mit } b >> y \text{ gilt } \Delta P = \frac{2 \cdot \sigma \cdot \sin \alpha}{y}$$

mit:

| | |
|---|---|
| $P_a$ | = Umgebungsdruck [mbar] |
| $\Delta P$ | = maximal mögliche Druckdifferenz [mbar] |
| y | = Spalthöhe [mm] |
| b | = Spaltlänge (Dichtungslänge) [mm] |
| A | = Querschnittsfläche des Spaltes in [mm$^2$] |
| | = y * b (in der Regel ist b >> y) |
| U | = Umfang des Spaltes = 2 * (y + b) [mm] |
| $\sigma$ | = Oberflächenspannung der flüssigen Masse [N/m] |

(fortgesetzt)

$\alpha$ = Benetzungswinkel [°]

Der Benetzungswinkel wird beim Glaslot im flüssigen Zustand mit einem Erhitzungsmikroskop bestimmt (z. B. wenn ein Glaslot charakterisiert und die Benetzung bei unterschiedlichen Temperaturen ermittelt werden soll). Alternativ kann man den Benetzungswinkel auch relativ einfach im erstarrten Zustand anhand einer Makroaufnahme ermitteln.

Die Oberflächenspannung kann nach der Methode des liegenden Tropfens ermittelt werden. Dazu wird das Glaslot erwärmt bis es schmilzt. wobei das Glaslot bei dieser Messung nicht mit der Unterlage reagieren darf, bzw. diese nicht benetzen darf.

Durch diese Gleichung wird die Abhängigkeit des Spaltmaßes (Spalthöhe) y in Abhängigkeit vom erwarteten Differenzdruck ersichtlich. Je größer der zu erwartende Druckunterschied zwischen Außendruck und innerem Zellendruck ist, desto geringer muss das Spaltmaß ausfallen, um die Dichtigkeit mit Hilfe des ausgewählten Glaslotes zu gewährleisten. Die durch die Gleichung ermittelte Spalthöhe gibt dabei die maximale Spalthöhe an, die aber regelmäßig auch unterschritten werden kann.

Es gilt das Kräftegleichgewicht am Tropfen:

$$\rho * g * h = \sigma * \left(\frac{1}{r_1}\right) + \left(\frac{1}{r_2}\right)$$

mit

| | |
|---|---|
| $\rho$ | = Dichte des flüssigen Materials |
| $g$ | = Erdbeschleunigung |
| $h$ | = Höhe des Tropfens |
| $s$ | = Oberflächenspannung |
| $r_1, r_2$ | = Hauptkrümmungsradien |

Als Ausführungsbeispiele zur Bestimmung der Oberflächenspannungen wurden ein Glaslot der Fa. Schott (Glas SCHOTT G017-096 K3) sowie ein weiteres Glas (Glas H) verwendet, wobei K 3 bedeutet: Pulver mit Partikelgröße $d_{50} = 10 \pm q\ \mu m$, $d_{99} \leq 63\ \mu m$.

Tabelle 2:

| Daten für G017-096 K3 der Fa. Schott, Sinterglas vom Typ Pb-B-Si mit folgender Zusammensetzung: | | | | | |
|---|---|---|---|---|---|
| PbO [Gew.-%] | $B_2O_3$ [Gew.-%] | $SiO_2$ [Gew.-%] | Ausdehnungskoeffizient bei 600 °C [$10^{-6}$ K$^{-1}$] | Tg [°C] | Fügetemperatur [°C] |
| 10-50 | k.A. | k.A. | 4,8 | 456 | 680 |

a) Die graphische Auswertung eines Glaslottropfens von Glas SCHOTT G017-096 K3 auf einer Crofer 22 APU-Unterlage bei T = 620 °C ergab beispielsweise die folgenden Werte.

| | |
|---|---|
| $h$ | = 4,2 mm |
| $r_1$ | = 2,1 mm, |
| $r_2$ | = 2,0 mm. |

Die Dichte des flüssigen Glaslotes ergibt sich aus der Masse des Tropfens geteilt durch das Volumen:

$$r = m / V = 0,00378\ g/mm^3$$

Somit ergibt sich die Oberflächenspannung zu:

$$\sigma = \frac{\rho \cdot g \cdot h \cdot r_1 \cdot r_2}{r_1 + r_2} \quad = 0{,}1595 \, \frac{N}{m}$$

Mit diesem Wert ergibt sich die maximal mögliche Druckdifferenz bei einer vorgegebenen Spalthöhe von 70 $\mu$m und einem Winkel $\alpha$ von 80 ° beispielsweise zu:

$$\Delta P = \frac{2 \cdot 0{,}1595 \, \frac{N}{m} \cdot \sin 80°}{0{,}07 mm} = 4488 \, Pa$$

Aktuelle SOFC - Stapel werden zurzeit mit einem Überdruck vom 25 mbar (1 bar = 100000 Pa) beim Anmelder getestet. In diesem Fall ergibt sich ein Sicherheitsfaktor von:

$$s = \frac{4488 Pa}{25 \cdot \frac{100000}{1000} Pa} = \frac{4488}{2500} = 1{,}8$$

b) Die graphische Auswertung eines Tropfens aus Glaslot H ebenfalls auf einer Unterlage aus Crofer 22 APU bei 870 °C ergab beispielsweise die folgenden Werte.

| | |
|---|---|
| h | = 4,1 mm |
| $r_1$ | = 2,38 mm, |
| $r_2$ | = 2,42 mm. |

Die Dichte des flüssigen Glaslotes ergibt sich aus der Masse des Tropfens geteilt durch das Volumen:

$$\rho = m / V \quad = 0{,}003154 \, g/mm^3$$

Somit ergibt sich die Oberflächenspannung zu:

$$\sigma = \frac{\rho \cdot g \cdot h \cdot r_1 \cdot r_2}{r_1 + r_2} \quad = 0{,}1522 \, \frac{N}{m}$$

Mit diesem Wert ergibt sich die maximal mögliche Druckdifferenz bei einer Spalthöhe von 70 $\mu$m und einem Winkel $\alpha$ von 80 ° bei dem Einsatz von Glaslot H zu:

$$\Delta P = \frac{2 \cdot 0{,}1522 \, \frac{N}{m} \cdot \sin 80°}{0{,}07 mm} = 4283 \, Pa$$

Aktuelle SOFC - Stapel werden zurzeit mit einem Überdruck vom 25 mbar (1 bar = 100000 Pa) beim Anmelder getestet. In diesem Fall ergibt sich ein Sicherheitsfaktor von:

$$\sigma \doteq \frac{4283\,Pa}{25\cdot\dfrac{100000}{1000}\,Pa} = \frac{4283}{2500} = 1{,}7$$

Somit kann davon ausgegangen werden, dass diese Dichtungsart durchaus funktionstüchtig ist.

Für eine Abdichtung zwischen zwei Bauteilen 1,2 mit beispielsweise drei parallelen Dichtungsfugen über drei Erhebungen (Stegen) können die maximalen Spalthöhen $y_{3a}$, $y_{3b}$ und $y_{3c}$ für Glaslot H als Dichtungsmaterial wie aus Figur 4 ersichtlich berechnet werden. Dabei wurde der Winkel $\alpha$ = 80 °, $\sigma = 0{,}1522\,\dfrac{N}{m}$ und T = 870 °C gewählt.

Die erforderliche Spalthöhe berechnet sich jeweils aus der an der Dichtung anliegenden Druckdifferenz, für die gilt $\Delta P = \dfrac{2\cdot\sigma\cdot\sin\alpha}{y}$.

Für die Dichtung 3a ergibt sich, sofern eine Druckdifferenz von 25 mbar (2500 Pa) angenommen wird, eine maximale Spalthöhe a von

$$y_{3a} = \frac{2\cdot 0{,}1522\,\dfrac{N}{m}\cdot\sin 80^{\circ}}{2500\,Pa} = 120\ \mu m$$

Analog ergeben sich für die Dichtungen 3b und 3c mit einer Druckdifferenz von $\Delta P_{2/1} = P_2\text{-}P_1$ = 15 mbar und von $\Delta P_{3/2} = P_3\text{-}P_2$ = 10 mbar maximale Spalthöhen für $y_{3b}$ von 200 $\mu m$ und für $y_{3b}$ von 300 $\mu m$.

Das bedeutet, dass je höher der Überdruck innerhalb der Brennstoffzelle gegenüber dem Außendruck gewählt wird, je enger müssen die maximalen Spalthöhen ausgestaltet sein.

Ferner ist die einzuhaltende Spalthöhe abhängig von dem eingestellten Temperaturbereich der Brennstoffzelle. Bei steigender Temperatur muss die Spalthöhe kleiner ausgestaltet werden, bzw. bei niedrigeren Temperaturen kann der Spalt durchaus breiter ausgestaltet sein, um dieselbe Kapillarkraft zu erreichen.

In der einfachsten Ausgestaltung de Erfindung ist nur eine Dichtungsfuge vorgesehen, die auf Grund der Gesamtdruckdifferenz eine besonders schmale Spalthöhe aufweist. Sind unter sonst identischen Rahmenbedingungen zwei oder mehr Dichtungsreihen vorgesehen, so können die einzelnen Spalthöhen auf Grund der geringeren Teildruckdifferenzen entsprechend höher ausfallen.

Beim Verfahren zur Herstellung einer erfindungsgemäßen Dichtungsanordnung sind zunächst die Rahmenbedingungen, wie beispielsweise die typische Betriebstemperatur oder die zu erwartende Druckdifferenz $\Delta P$ zwischen dem Zellinneren und dem Außendruck festzulegen. Danach bemisst sich die Auswahl eines geeigneten Glaslotes danach, dass das Glaslot eine entsprechende dilatometrische Erweichungstemperatur $T_D$ von wenigstens 140 K unterhalb der Betriebstemperatur aufweisen sollte. Der Unterschied zwischen $T_D$ und der gewählten Betriebtemperatur sollte vorzugsweise zwischen 140 und 240 K liegen.

Die Parameter $\sigma$ = Oberflächenspannung der flüssigen Masse [$N/m$] und $\alpha$ = Benetzungswinkel [°] des Glaslotes werden ermittelt oder sind bereits bekannt. Über bereits genannte Näherungsgleichung, $\Delta P \approx \dfrac{2\cdot\sigma\cdot\sin\alpha}{y}$ kann dann die maximale Spalthöhe nach $y \approx \dfrac{2\cdot\sigma\cdot\sin\alpha}{\Delta P}$ berechnet werden.

Entsprechend sind die Bauteile 1 und 2 so zu fertigen, dass in Abhängigkeit von den Abstandshaltern mit der Höhe x und den Erhebungen mit der jeweiligen Steghöhe $z_{h1}$ und $z_{h2}$ die maximale Spalthöhe sichergestellt werden kann. Dabei können entweder bei einer vorgegebenen Abstandshalterhöhe x die Erhebungen entsprechend angepasst werden ($z_{h1} + z_{h2} \geq$ x - maximale Spalthöhe), oder es wird bei vorgegebenen Steghöhen $z_{h1}$ und $z_{h2}$ die Höhe des Abstandshalters x entsprechend angepasst (x $\leq z_{h1} + z_{h2}$ + maximale Spalthöhe).

Die Erhebungen sollten jeweils eine Mindesthöhe von ca. 500 $\mu m$ aufweisen. Gleiche Steghöhen für beide Bauteile können von Vorteil sein, sind aber nicht zwingend erforderlich.

Beim Zusammenbau wird auf wenigstens eine Erhebung das ausgewählte Glaslot, beispielsweise in Form einer Glaslotraupe aufgebracht. Die beiden Bauteile werden zum Fügen auf eine Temperatur oberhalb der Erweichungstemperatur $T_D$ erwärmt und derart zusammengepresst, dass die zuvor ermittelte maximale Spalthöhe erreicht oder nur leicht unterschritten wird. Das Glaslot erweicht und füllt den gesamten Spalt aus, so dass eine gasdichte Dichtung entsteht. Typische Fügetemperaturen liegen ca. 100 K oberhalb der Erweichungstemperatur $T_D$.

Vorteilhaft werden zur Einhaltung des Abstandes Abstandshalter mit der Höhe x zwischen den Bauteilen außerhalb der Dichtungsfuge eingesetzt, wobei sich die Höhe x derart bemisst, dass bei Zusammenpressen die zuvor ermittelte maximale Spalthöhe erreicht oder unterschritten wird.

Abschließend lässt sich die Erfindung wie folgt zusammenfassen.

Die Erfindung betrifft eine Dichtungsanordnung für den Einsatz einer Glaslotdichtung zwischen hoch temperaturbelasteten Bauteilen, umfassend wenigstens zwei zu fügende Bauteile 1 und 2, dessen Oberflächen in einem Abstand x beabstandet angeordnet sind, sowie zwischen den Bauteilen im Bereich der Dichtungsfuge angeordnetes Glaslot. Erfindungsgemäß weisen die beide Bauteile im Bereich der Dichtungsfuge eine korrespondierende Erhebung auf, dergestalt, dass die beiden Erhebungen einen Spalt zur Aufnahme des Glaslotes bilden, dessen Spalthöhe y geringer ist, als der Abstand x. Zudem weist die erfindungsgemäße Dichtungsanordnung innerhalb des Spaltes ein Glaslot auf, welches bei einer Betriebstemperaturen zwischen 550 und 900 °C erweicht vorliegt.

Vorteilhaft weist die Dichtungsanordnung Erhebungen mit einer Steghöhe $z_h$ von wenigstens 500 $\mu$m auf. Die Steghöhen $z_{h1}$ und $z_{h2}$ können beispielsweise identisch sein.

In einer Ausgestaltung der erfindungsgemäßen Dichtungsanordnung weist diese wenigstens zwei Dichtungsfugen mit jeweils korrespondierenden Erhebungen auf, wobei die Erhebungen eines Bauteils einen Abstand $z_b$ von wenigstens 1 mm aufweisen. Bei der Ausgestaltung mit mehreren Dichtungsfugen kann diese identische Spaltenhöhe aufweisen, insbesondere Spalthöhe zwischen 50 und 150 $\mu$m.

Vorteilhaft umfasst die Dichtungsanordnung ein Glaslot, welches bei einer Betriebstemperatur zwischen 550 und 900 °C eine Viskosität zwischen 2,2 Pa.s und 2,6 Pa.s aufweist.

In einer besonderen Ausgestaltung umfasst die Dichtungsanordnung ein Glaslot, welches eine dilatometrische Erweichungstemperatur ($T_D$) von weniger als 720 °C aufweist, vorteilhaft sogar von weniger als 650 °C und insbesondere von weniger als 550 °C. Diese Glaslote können ihre Dichtfunktion in den erfindungsgemäßen Dichtungsanordnungen vorteilhaft auch bei niedrigen Betriebstemperaturen der SOFC um die 700 °C bewirken.

In der Anmeldung zitierte Literatur:

[1] SCHOTT Technical Glasses- Physical and technical properties, February 2010, download.

**Patentansprüche**

1. Dichtungsanordnung für den Einsatz einer Glaslotdichtung zwischen hoch temperaturbelasteten Bauteilen, umfassend wenigstens zwei zu fügende Bauteile 1 und 2, dessen Oberflächen in einem Abstand x beabstandet angeordnet sind, sowie zwischen den Bauteilen im Bereich der Dichtungsfuge angeordnetes Glaslot,
**dadurch gekennzeichnet,**

   - **dass** im Bereich der Dichtungsfuge beide Bauteile eine korrespondierende Erhebung aufweisen, dergestalt, dass die beiden Erhebungen einen Spalt zur Aufnahme des Glaslotes bilden, dessen Spalthöhe y geringer ist, als der Abstand x, und
   - **dass** innerhalb des Spaltes ein Glaslot 3a angeordnet ist, welches bei einer Betriebstemperatur zwischen 550 und 900 °C erweicht vorliegt.

2. Dichtungsanordnung nach Anspruch 1, bei dem die Erhebungen jeweils eine Steghöhe $z_{h1}$, $z_{h2}$ von wenigstens 500 $\mu$m aufweisen.

3. Dichtungsanordnung nach einem der Ansprüche 1 bis 2, bei dem die Steghöhen $z_{h1}$ und $z_{h2}$ identisch sind.

4. Dichtungsanordnung nach einem der vorhergehenden Ansprüche 1 bis 3, bei dem wenigstens zwei Dichtungsfugen mit jeweils korrespondierenden Erhebungen vorgesehen sind, wobei die Erhebungen eines Bauteils einen Abstand $z_b$ von wenigstens 1 mm aufweisen.

5. Dichtungsanordnung nach vorhergehendem Anspruch 4, bei dem beide Dichtungsfugen eine identische Spaltenhöhe aufweisen.

**6.** Dichtungsanordnung nach einem der vorhergehenden Ansprüche 1 bis 5, mit einer Spalthöhe zwischen 50 und 150 μm.

**7.** Dichtungsanordnung nach einem der vorhergehenden Ansprüche 1 bis 7, bei dem die Spalthöhe über die Dichtungsfuge konstant ausgestaltet ist.

**8.** Dichtungsanordnung nach einem der vorhergehenden Ansprüche 1 bis 8, umfassend ein Glaslot, welches bei einer Betriebstemperatur zwischen 550 und 900 °C eine Viskosität zwischen 2,2 Pa.s und 2,6 Pa.s aufweist.

**9.** Dichtungsanordnung nach einem der vorhergehenden Ansprüche 1 bis 8, umfassend ein Glaslot, welches eine dilatometrische Erweichungstemperatur ($T_D$) von weniger als 720 °C aufweist, vorteilhaft sogar von weniger als 650 °C und insbesondere von weniger als 550 °C.

**10.** Verfahren zur Herstellung einer Dichtungsanordnung nach einem der Ansprüche 1 bis 9, **dadurch gekennzeichnet,**

- **dass** ein Glaslot ausgewählt wird, welches bei einer Betriebstemperatur zwischen 550 und 900 °C erweicht vorliegt,
- **dass** in Abhängigkeit vom gewählten Glaslot und der zu erwartenden Druckdifferenz zwischen dem Zellinneren und dem Außendruck eine maximale Spalthöhe für den Dichtungsspalt ermittelt wird,
- **dass** die zwei zu fügenden Bauteile im Bereich der Dichtungsfuge jeweils eine Erhebung aufweisen, wobei die Erhebungen eine Steghöhe $z_{h1}$, $z_{h2}$ von mindestens 500 μm aufweisen,
- das das Glaslot auf wenigstens eine Erhebung aufgebracht wird,
- **dass** die Bauteile zum Fügen auf eine Temperatur oberhalb der Erweichungstemperatur $T_D$ des Glaslotes erwärmt werden, und
- **dass** die Bauteile derart zusammengepresst werden, dass die zuvor ermittelte maximale Spalthöhe erreicht oder unterschritten wird, wobei das erweichte Glaslot den Spalt vollständig ausfüllt.

**11.** Verfahren zur Herstellung einer Dichtungsanordnung nach vorhergehendem Anspruch, bei dem wenigstens ein Abstandshalter mit der Höhe x zwischen den Bauteilen außerhalb der Dichtungsfuge eingesetzt wird, wobei sich die Höhe x derart bemisst, dass bei Zusammenpressen die zuvor ermittelte maximale Spalthöhe erreicht oder unterschritten wird.

**12.** Verfahren nach einem der Ansprüche 10 bis 11, wobei die maximale Spalthöhe $y$ über die Näherungsgleichung

$$y \approx \frac{2 \cdot \sigma \cdot \sin\alpha}{\Delta P}$$

berechnet wird, mit σ = Oberflächenspannung des flüssigen Glaslots [N/m], α = Benetzungswinkel [°] des Glaslotes und ΔP = maximal mögliche Druckdifferenz [mbar].

Figur 1a

Figur 1b

Figur 2

Figur 3

Figur 4

$P_3 =$
1050 mbar

$P_2 =$
1040 mbar

$P_1 =$
1025 mbar

$P_a =$
1000 mbar

Figur 5

EP 2 648 255 A1

**Europäisches Patentamt**
**European Patent Office**
**Office européen des brevets**

## EUROPÄISCHER RECHERCHENBERICHT

Nummer der Anmeldung

EP 13 00 1474

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | DE 10 2009 008717 A1 (ELRINGKLINGER AG [DE]) 19. August 2010 (2010-08-19)<br>* Ansprüche 1,11,15 *<br>* Abbildungen 10,11 *<br>* Absätze [0010], [0011], [0044], [0053], [0056], [0080], [0093] - [0095] * | 1-10,12<br><br>11 | INV.<br>H01M8/02<br>C04B37/00<br>F16J15/10<br><br>ADD.<br>H01M8/12 |
| X<br>Y | EP 2 104 172 A1 (UNIV DENMARK TECH DTU [DK]) 23. September 2009 (2009-09-23)<br>* Ansprüche 1,2 *<br>* Abbildung 1b *<br>* Absätze [0018], [0042] *<br>* Beispiel 2 * | 1-10,12<br><br>11 | |
| Y | DE 10 2006 058335 A1 (STAXERA GMBH [DE]) 12. Juni 2008 (2008-06-12)<br>* Ansprüche 1,2,23,25 *<br>* Abbildungen 3-8 *<br>* Absatz [0011] * | 1-12 | |
| Y | EP 0 921 583 A1 (SIEMENS AG [DE]) 9. Juni 1999 (1999-06-09)<br>* Ansprüche 1-5,9 *<br>* Abbildung 1 *<br>* Absätze [0014], [0015], [0017] * | 1-12 | RECHERCHIERTE SACHGEBIETE (IPC)<br><br>H01M<br>C04B<br>F16J |

Der vorliegende Recherchenbericht wurde für alle Patentansprüche erstellt

| Recherchenort | Abschlußdatum der Recherche | Prüfer |
|---|---|---|
| München | 27. Juni 2013 | Perednis, Dainius |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

14

**ANHANG ZUM EUROPÄISCHEN RECHERCHENBERICHT
ÜBER DIE EUROPÄISCHE PATENTANMELDUNG NR.**                    EP 13 00 1474

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-06-2013

| Im Recherchenbericht angeführtes Patentdokument | Datum der Veröffentlichung | Mitglied(er) der Patentfamilie | | Datum der Veröffentlichung |
|---|---|---|---|---|
| DE 102009008717 A1 | 19-08-2010 | DE | 102009008717 A1 | 19-08-2010 |
|  |  | EP | 2224526 A1 | 01-09-2010 |
| EP 2104172 A1 | 23-09-2009 | AT | 523911 T | 15-09-2011 |
|  |  | CN | 102084527 A | 01-06-2011 |
|  |  | EP | 2104172 A1 | 23-09-2009 |
|  |  | EP | 2258014 A1 | 08-12-2010 |
|  |  | KR | 20100137529 A | 30-12-2010 |
|  |  | US | 2011100805 A1 | 05-05-2011 |
|  |  | WO | 2009115341 A1 | 24-09-2009 |
| DE 102006058335 A1 | 12-06-2008 | AU | 2007331948 A1 | 19-06-2008 |
|  |  | CA | 2671905 A1 | 19-06-2008 |
|  |  | CN | 101573818 A | 04-11-2009 |
|  |  | DE | 102006058335 A1 | 12-06-2008 |
|  |  | EP | 2115804 A1 | 11-11-2009 |
|  |  | JP | 5154570 B2 | 27-02-2013 |
|  |  | JP | 2010512626 A | 22-04-2010 |
|  |  | KR | 20090091763 A | 28-08-2009 |
|  |  | US | 2010068602 A1 | 18-03-2010 |
|  |  | WO | 2008071137 A1 | 19-06-2008 |
| EP 0921583 A1 | 09-06-1999 | KEINE | | |

EPO FORM P0461

Für nähere Einzelheiten zu diesem Anhang : siehe Amtsblatt des Europäischen Patentamts, Nr.12/82